# EUROPEAN PATENT SPECIFICATION

(11) **EP 1 342 658 B1**
(45) Date of publication and mention of the grant of the patent: **02.11.2011**
(21) Application number: 03005131.2
(22) Date of filing: 07.03.2003
(51) Int. Cl.: B62M 9/12

(54) **Bicycle rear derailleur**
Hinterradkettenschaltung für ein Fahrrad
Dérailleur arrière pour bicyclette

(30) Priority: 07.03.2002 US 94477; 11.12.2002 US 317939
(43) Date of publication of application: 10.09.2003
(73) Proprietor: SHIMANO INC., Osaka 590-8577 (JP)
(72) Inventor: Shahana, Satoshi, Osaka-shi, Osaka (JP); Oseto, Shinya, Sakai-shi, Osaka (JP); Fujii, Kazuhiro, Kawachinagano-shi, Osaka (JP)
(74) Representative: GROSSE SCHUMACHER KNAUER VON HIRSCHHAUSEN

## Description

### BACKGROUND OF THE INVENTION

The present invention is directed to bicycles and, more particularly, to a bicycle rear derailleur.

Bicycles typically include a frame, front and rear wheels, pedals that are used to rotate one or more front sprockets, a plurality of rear sprockets mounted to the rear wheel, and a chain that engages one of the plurality of front sprockets and one of the plurality of rear sprockets. A front derailleur mounted to the frame in close proximity to the plurality of front sprockets is used to shift the chain among the plurality of front sprockets, and a rear derailleur mounted to the frame in close proximity to the plurality of rear sprockets is used to shift the chain among the plurality of rear sprockets. The rider typically uses manual, electric, or hydraulic control devices to control the front and rear derailleurs.

Small bicycles that have a frame capable of folding upon itself to facilitate carrying on public transportation or storage at work facilities are becoming more popular. Because such bicycles are carried and stored in crowded places, they should be very compact. Thus, the sizes of the frame and wheels are minimized accordingly. Very often the frame folds in half in the middle so that the front wheel is placed adjacent to the rear wheel.

From the document US 4 407 599 A a bicycle rear derailleur according to the preamble of the invention is known that has a base member for attachment to a frame. The base member is constructed to have a uniform thickness between a laterally outer surface and a laterally inner surface. The base member has a projection extending laterally outwardly from the outer surface. The projection is an alignment structure to engage the a recess of the frame. An additional positioning structure is arranged close to the projection and acts together with the projection to engage with the frame and to prevent the projection from rotating in the recess to secure a predetermined position of derailleur relative to the frame.

This base member has a complicated structure and is rather thick in an area where the projection is arranged. When mounted to the frame, the base member thus requires additional lateral space at the inside portion of the frame.

Thus, the rear derailleur should be as compact as possible so as not to protrude excessively laterally and impact the front wheel, thereby preventing compact folding of the frame. Furthermore, the rear derailleur should not be so large or mounted so low on the frame as to strike the ground as the bicycle is being ridden.

### SUMMARY OF THE INVENTION

The present invention is directed a bicycle rear derailleur according to claim 1. The bicycle rear derailleur comprises a base member for attachment to a bicycle frame and a movable member. The movable member is supporting a chain guide and is operatively coupled to the base member such that the chain guide moves laterally to shift a chain among a plurality of gears. The base member comprises a laterally inner surface, a laterally outer surface, a projection and an opening. One of the laterally inner surface and the laterally outer surface faces one of a laterally outer surface and a laterally inner surface of the frame, respectively, when the derailleur is mounted to the frame, and the one of the laterally inner surface and the laterally outer surface that faces the frame, respectively, includes an outermost surface portion. The projection extends in a lateral direction from the one of the laterally inner surface and the laterally outer surface that faces the frame, and is configured to engage a corresponding recess in the frame. The opening for receiving a fastener there through that is configured to attach the base member to the frame. The projection is disposed in close proximity to the opening and has a shape that is configured to prevent the projection from rotating in the recess when viewed in the lateral direction. One of the laterally outer surface and the laterally inner surface that faces the frame, respectively, includes a substantially flat and straight recessed surface portion laterally recessed from the outermost surface portion. Stepped surface portions extend between the outermost surface portion and the recessed surface portion. The projection extends laterally outwardly from the recessed surface portion. With this arrangement, the base member can be mounted to a laterally inner surface of the frame such that the projection engages a corresponding recess in the frame. The laterally inner mounting of the base member helps to minimize the lateral extent of the derailleur so as not to interfere with the folding of the frame, and the projection helps to securely position the derailleur on the frame without requiring additional positioning structures that would increase the overall size of the derailleur.

The derailleur is adapted to be used with a frame member of a bicycle, wherein the frame member has an axle opening for receiving an axle therethrough and first and second prongs with corresponding first and second end faces, wherein the first and second prongs define a slot in close proximity to the axle opening and an opening extending through the first and second end faces.

Additional inventive features will become apparent from the description below, and such features may form the basis of further inventions.

### BRIEF DESCRIPTION OF THE DRAWINGS

Fig. 1 is a side view of a folding bicycle that includes a particular embodiment of a rear derailleur;
Fig. 2 is a more detailed view of the derailleur shown in Fig. 1;
Fig. 3 is a view taken along line III-III in Fig. 2;
Fig. 4 is a view illustrating the installation of the derailleur base member on the frame;
Fig. 5 illustrates an alternative embodiment of a rear derailleur; and
Fig. 6 is a view taken along line VIII-VIII in Fig. 5.

### DETAILED DESCRIPTION OF THE EMBODIMENTS

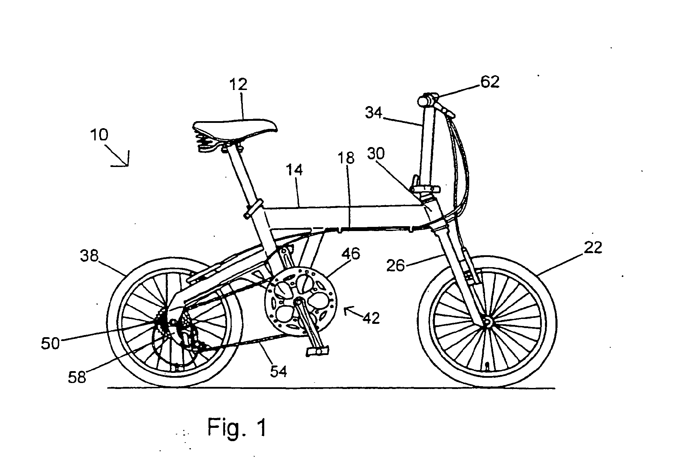

Fig. 1 is a side view of a folding bicycle 10 that includes a frame 14 with a known folding joint 18 in the middle, a seat 12, a front wheel 22 mounted to a fork 26 that is rotatably mounted in a head tube 30 of frame 14, a handlebar assembly 34 for rotating the fork 26 and front wheel 22, a rear wheel 38 mounted to the rear of frame 14, a pedal assembly 42 rotatably mounted to frame 14 for rotating a front sprocket 46, a plurality of rear sprockets 50 mounted to the rear wheel 38, and a chain 54 that engages the front sprocket 46 and one of the plurality of rear sprockets 50. A rear derailleur 58 is mounted to the frame 14 in close proximity to the plurality of rear sprockets 50 for shifting the chain 54 among the plurality of rear sprockets 50. In this embodiment, a conventional manually operated shift control device 62 mounted to the handlebar assembly 34 controls rear derailleur 58 in a well-known manner. In other embodiments, multiple front sprockets 46 may be provided, and a front derailleur may be used to shift chain 54 among such a plurality of sprockets.

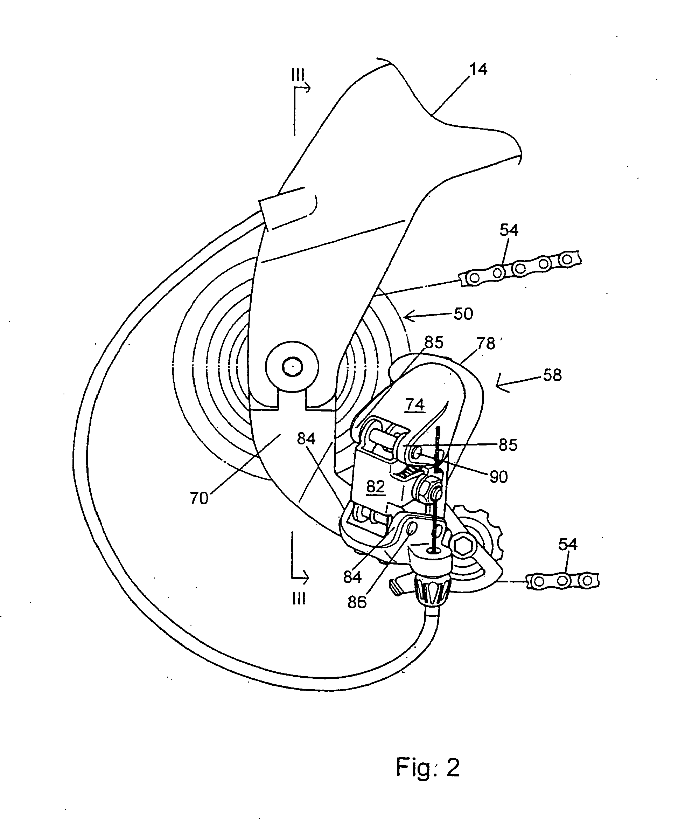

Fig. 2 is a more detailed view of derailleur 58 mounted to frame 14. Derailleur 58 includes a one-piece base member 70, a movable member 74 supporting a chain guide 78, and a link 82 directly connected between opposed coupling ears 84 on base member 70 and between opposed coupling ears 85 on movable member 74 through pivot pins 86 and 90, respectively. Movable member 74, and thereby chain guide 78, move laterally to shift chain 54 among the plurality of sprockets 50 in response to the operation of shift control device 62 in a well known manner.

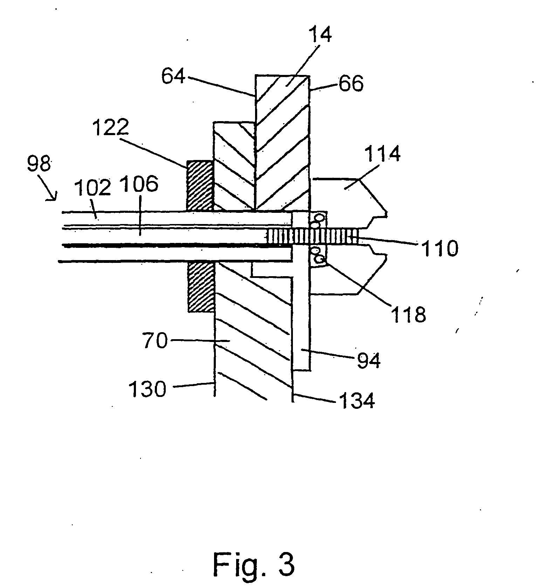

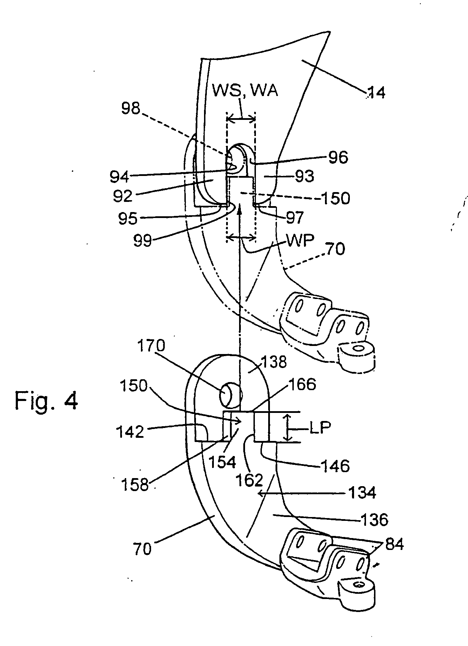

Fig. 3 is a view taken along line III-III in Fig. 2, and Fig. 4 is a view illustrating the installation of base member 70 on frame 14. In this embodiment, frame 14 includes a laterally inner surface 64, a laterally outer surface 66, and first and second prongs 92 and 93. First and second prongs 92 and 93 have corresponding first and second end faces 95 and 97, wherein first and second prongs 92 and 93 define a recess such as a slot 94 that is contiguous with an axle opening 96 and with an opening 99 that extends through first and second end faces 95 and 97. Axle opening 96 receives an axle 98 of rear wheel 38 therein. Axle 98 is a conventional quick-release axle comprising a hollow axle portion 102, a draw bar 106 having a threaded end portion 110, a threaded nut 114 screwed onto the threaded end portion 110, and a spring 118 disposed between nut 114 and frame 14. Element 122 is a hub locking nut that retains hollow axle portion 102 and other internal components to rear wheel 38.

Base member 70 has a laterally inner surface 130 and a laterally outer surface 134 that faces laterally inner surface 64 of frame 14 when derailleur 58 is mounted to frame 14. Laterally outer surface 134 includes an outermost surface portion 136, a substantially flat and straight recessed surface portion 138, and substantially flat and straight stepped surface portions 142 and 146 extending between outermost surface portion 136 and recessed surface portion 138, wherein stepped surface portions 142 and 146 are substantially perpendicular to both outermost surface portion 136 and recessed surface portion 138. A projection 150 extends laterally outwardly from recessed surface portion 138 for engaging slot 94 such that slot 94 opens through the first and second end faces 95 and 97 toward the base member. In other words, base member 70 does not have a corresponding slot that opens in the same direction as slot 94. In this embodiment, first and second end faces 95 and 97 face stepped surface portions 142 and 146. Also, projection 150 extends between end faces 95 and 97, through opening 99 and into slot 94 as shown in Fig. 4.

In this embodiment, projection 150 has a substantially rectangular shape. More specifically, projection 150 includes an outer projection surface 154 that is level with outermost surface portion 136, a substantially straight and flat first side wall 158 for facing first prong 92, a substantially straight and flat second side wall 162 for facing second prong 93, and a substantially straight and flat third side wall 166 extending between the end edges of first side wall 158 and second side wall 162. First side wall 158 is substantially parallel to second side wall 162, and third side wall 166 is substantially perpendicular to both first side wall 158 and second side wall 162. First side wall 158, second side wall 162 and third side wall 166 also are substantially perpendicular to recessed surface portion 138. Additionally, first side wall 158 and second side wall 162 are substantially perpendicular to stepped surface portions 142 and 146. Of course, none of the foregoing surfaces need to be straight, flat, perpendicular, parallel, recessed or flush, and the particular configurations may depend upon the application.

In this embodiment, a width WP of projection 150 between first side wall 158 and second side wall 162 is substantially equal to a width WS of slot 94. This allows base member 70, and hence derailleur 58, to be properly and snugly positioned on frame 14 without requiring additional positioning structures. Also, a width WA of axle opening 96 is substantially equal to width WS of slot 94. This allows hollow axle portion 102 to be inserted through the end of slot 94 to facilitate installation of wheel 38 to frame 14 without excessive play. In general, projection 150 has a shape that prevents projection 150 from rotating in slot 94 when viewed in the lateral direction. To accomplish this in this embodiment, first side wall 158 and second side wall 162 are both elongated so that a length LP of projection 150 is likewise elongated, and in this embodiment length LP is greater than the width WP of projection 150. Thus, the elongated first and second side walls 158 and 162 even by themselves can stabilize base member 70 within slot 94. Of course, these dimensions are not necessary and may be changed to suit the application.

Base member 70 includes a fastener opening 170 for receiving a fastener therethrough. Hollow axle portion 102 and draw bar 106 function as a fastener in this embodiment. Fastener opening 170 is disposed in close proximity to projection 150. Thus, the fastening and positioning of base member 70 to frame 14 can be accomplished very compactly without requiring dedicated fastening and positioning hardware.

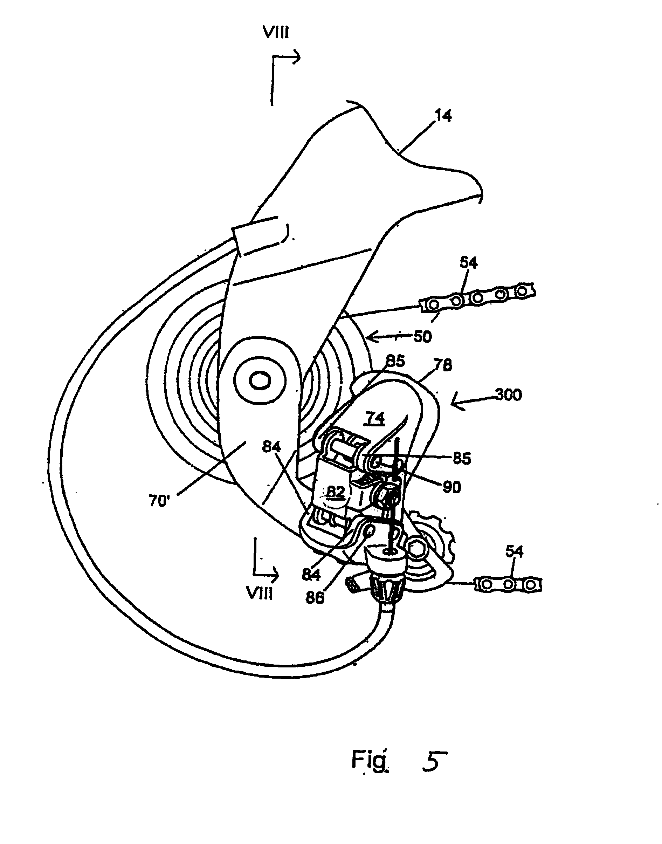

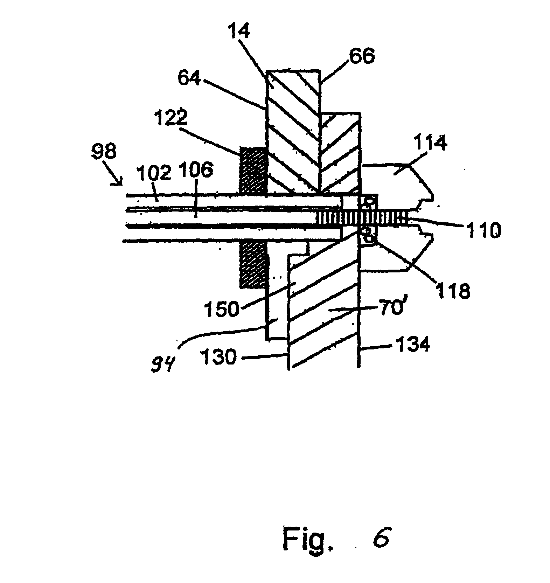

Figs. 5 and 6 are detailed views of a rear derailleur 300 which represents another embodiment. Derailleur 300 is constructed substantially the same as derailleur 58 in the first embodiment, so only the differences will be described in detail. In this embodiment, a base member 70' is constructed the same as base member 70 in the first embodiment, except recessed surface portion 138 and projection 150 are formed on the laterally inner surface 130 of base member 70', and laterally inner surface 130 faces laterally outer surface 66 of frame 14 when derailleur 300 is mounted to frame 14.

While the above is a description of various embodiments of inventive features, further modifications may be employed without departing from the scope of the present invention. For example, the size, shape, location or orientation of the various components may be changed as desired. The recess that receives the projection in the base member may be a simple depression or some other receding structure associated with the surface of the frame instead of the cutouts shown, or it may be a combination of such structures. Components that are shown directly connected or contacting each other may have intermediate structures disposed between them. The functions of one element may be performed by two, and vice versa. It is not necessary for all advantages to be present in a particular embodiment at the same time.

Thus, the scope of the invention should not be limited by the specific structures disclosed or the apparent initial focus on a particular structure or feature, but only by the claims.

## Claims

1. A bicycle rear derailleur (58, 300) comprising:
a base member (70, 70') for attachment to a bicycle frame (14), wherein the base member (70, 70') comprises:
a laterally inner surface (130),
a laterally outer surface (134), wherein one of the laterally inner surface (130) and the laterally outer surface (134) faces one of a laterally outer surface (64) and a laterally inner surface (66) of the frame (14), respectively, when the derailleur (58, 300) is mounted to the frame (14), and the one of the laterally inner surface (130) and the laterally outer surface (134) that faces the frame (14), respectively, includes an outermost surface portion (136),
a projection (150) extending in a lateral direction from the one of the laterally inner surface (130) and the laterally outer surface (134) that faces the frame (14) and configured to engage a corresponding recess (94) in the frame (14), and
an opening (170) for receiving a fastener (98) there through configured to attach the base member (70, 70') to the frame (14), wherein the projection (150) is disposed in close proximity to the opening (170) and has a shape that is configured to prevent the projection (150) from rotating in the recess (94) when viewed in the lateral direction; and
a movable member (74) supporting a chain guide (78) and operatively coupled to the base member (70, 70') such that the chain guide (78) moves laterally to shift a chain (54) among a plurality of gears,
**characterized in that** one of the laterally outer surface (134) and the laterally inner surface (130) that faces the frame (14), respectively, includes a substantially flat and straight recessed surface portion (138) laterally recessed from the outermost surface portion (136) and stepped surface portions (142, 146) extending between the outermost surface portion (136) and the recessed surface portion (138), and the projection (150) extends laterally outwardly from the recessed surface portion (138).

2. The derailleur (58, 300) according to claim 1 wherein the base member (70, 70') is one-piece.

3. The derailleur (58, 300) according to claim 1 wherein the movable member (74) is coupled to the base member (70) through at least one directly connected link (82).

4. The derailleur (58, 300) according to claim 1 wherein the projection (150) comprises:
a first side wall (158); and
a second side wall (162) oriented substantially parallel to the first side wall (158).

5. The derailleur (58, 300) according to claim 1 or 4 wherein the projection (150) comprises:
a first side wall (158); and
a second side wall (162) facing away from the first side wall (158).

6. The derailleur (58, 300) according to claim4 or 5 wherein the first side wall (158) is substantially straight, and wherein the second side wall (162) is substantially straight.

7. The derailleur (58, 300) according to claim 4 wherein the projection (150) further comprises a third side wall (166) extending between the first side wall (158) and the second side wall (162).

8. The derailleur (58, 300) according to claim 7 wherein the first side wall (158) is substantially straight, wherein the second side wall (162) is substantially straight, and wherein the third side wall (166) is substantially straight.

9. The derailleur (58, 300) according to claim 7 wherein the third side wall (166) is substantially perpendicular to the first side wall (158) and to the second side wall (162).

10. The derailleur (58, 300) according to claim 1 or 3 comprising:
first and second coupling ears (84, 85) wherein
the link (82) is coupled to the first and second coupling ears (84, 85); and
the movable member (74) is coupled to the link (82).

11. The derailleur (58, 300) according to claim 10 wherein the first and second coupling ears (84, 85) are spaced apart from each other.

12. The derailleur (58, 300) according to claim 11 wherein the first and second coupling ears (84, 85) oppose each other.

13. The derailleur (58, 300) according to claim 12 wherein the link (82) is disposed between the first and second coupling ears (84, 85).

14. The derailleur (58, 300) according to claim 13 wherein the link (82) comprises a first end pivotally connected to the first and second coupling ears (84, 85).

15. The derailleur (58, 300) according to claim 14 wherein the link (82) has a second end pivotably connected to the movable member (74).

16. The derailleur (58, 300) according to claim 10 wherein
the link (82) is directly connected to the coupling ear (84); and
the movable member (74) is pivotally coupled to the link (82).

## Patentansprüche

1. Hinterer Umwerfer (58, 300) für Fahrräder, aufweisend:
ein Basiselement (70, 70') zur Befestigung an einem Fahrradrahmen (14), wobei das Basiselement (70, 70') aufweist:
eine in seitlicher Richtung innere Fläche (130),
eine in seitlicher Richtung äußere Fläche (134), wobei eine von der in seitlicher Richtung innerer Fläche (130) und der in seitlicher Richtung äußeren Fläche (134), einer von einer in seitlicher Richtung äußeren Fläche (64) bzw. einer in seitlicher Richtung innerer Fläche (66) des Rahmens (14) zugewandt ist, wenn der Umwerfer (58, 300) am Rahmen (14) montiert ist, und die eine von der in seitlicher Richtung inneren Fläche (130) und der in seitlicher Richtung äußeren Fläche (134), die jeweils dem Rahmen (14) zugewandt ist,
einen ganz außen befindlichen Flächenabschnitt (136) beinhaltet,
einen Vorsprung (150), der sich in einer seitlichen Richtung von der einen von der in seitlicher Richtung inneren Fläche (130) und der in seitlicher Richtung äußeren Fläche (134) erstreckt und der dem Rahmen (14) zugewandt ist und
konfiguriert ist, um mit einer entsprechenden Vertiefung (94) im Rahmen (14) in Eingriff zu kommen, und
eine Öffnung (170), die eine hindurchgehende Befestigungseinrichtung (98) aufnimmt, welche konfiguriert ist, um das Basiselement (70, 70') am Rahmen (14) zu befestigen, wobei der Vorsprung (150) in enger Nachbarschaft
zur Öffnung (170) angeordnet ist und eine Gestalt hat, die konfiguriert ist, um zu verhindern, dass der Vorsprung (150) in der Vertiefung (94) rotiert, bei Betrachtung in seitlicher Richtung; und
ein bewegliches Element (74), das eine Kettenführung (78) trägt und funktionsmäßig mit dem Basiselement (70, 70') verbunden ist, derart, dass sich die Kettenführung (78) in seitlicher Richtung bewegt, um eine Kette (54) zwischen einer Mehrzahl von Zahnrädern zu verschieben,
**dadurch gekennzeichnet, dass** eine von der in seitlicher Richtung äußeren Fläche (134) und der in seitlicher Richtung inneren Fläche (130), die jeweils dem Rahmen (14) zugewandt ist, einen im Wesentlichen ebenen und geraden vertieften Flächenabschnitt (138) beinhaltet, der in seitlicher Richtung vertieft von dem ganz außen befindlichen Flächenabschnitt (136) und den gestuften Flächenabschnitten (142, 146) angeordnet ist, die sich zwischen dem ganz außen befindlichen Flächenabschnitt (136) und dem vertieften Flächenabschnitt (138) erstrecken, und sich der Vorsprung (150) in seitlicher Richtung nach außen von dem vertieften Flächenabschnitt (138) erstreckt.

2. Umwerfer (58, 300) nach Anspruch 1, wobei das Basiselement (70, 70') einstückig ist.

3. Umwerfer (58, 300) nach Anspruch 1, wobei das bewegliche Element (74) an das Basiselement (70) mittels mindestens einem direkt verbundenen Verbindungsstück (82) gekoppelt ist.

4. Umwerfer (58, 300) nach Anspruch 1, wobei der Vorsprung (150) aufweist:
eine erste Seitenwand (158); und
eine zweite Seitenwand (162), die im Wesentlichen parallel zur ersten Seitenwand (158) ausgerichtet ist.

5. Umwerfer (58, 300) nach Anspruch 1 oder 4, wobei der Vorsprung (150) aufweist:
eine erste Seitenwand (158); und
eine zweite Seitenwand (162), die von der ersten Seitenwand (158) weg weist.

6. Umwerfer (58, 300) nach Anspruch 4 oder 5, wobei die erste Seitenwand (158) im Wesentlichen gerade ist, und wobei die zweite Seitenwand (162) im Wesentlichen gerade ist.

7. Umwerfer (58, 300) nach Anspruch 4, wobei der Vorsprung (150) weiter eine dritte Seitenwand (166) aufweist, die sich zwischen der ersten Seitenwand (158) und der zweiten Seitenwand (162) erstreckt.

8. Umwerfer (58, 300) nach Anspruch 7, wobei die erste Seitenwand (158) im Wesentlichen gerade ist, wobei die zweite Seitenwand (162) im Wesentlichen gerade ist, und wobei die dritte Seitenwand (166) im Wesentlichen gerade ist.

9. Umwerfer (58, 300) nach Anspruch 7, wobei die dritte Seitenwand (166) im Wesentlichen senkrecht zur ersten Seitenwand (158) und zur zweiten Seitenwand (162) ist.

10. Umwerfer (58, 300) nach Anspruch 1 oder 3, aufweisend:
erste und zweite Verbindungsösen (84, 85), wobei das Verbindungsstück (82) mit den ersten und zweiten Verbindungsösen (84, 85) verbunden ist; und
das bewegliche Element (74) mit dem Verbindungsstück (82) verbunden ist.

11. Umwerfer (58, 300) nach Anspruch 10, wobei die ersten und zweiten Verbindungsösen (84, 85) beabstandet voneinander angeordnet sind.

12. Umwerfer (58, 300) nach Anspruch 11, wobei die ersten und zweiten Verbindungsösen (84, 85) gegenüberliegend zueinander angeordnet sind.

13. Umwerfer (58, 300) nach Anspruch 12, wobei das Verbindungsstück (82) zwischen den ersten und zweiten Verbindungsösen (84, 85) angeordnet ist.

14. Umwerfer (58, 300) nach Anspruch 13, wobei das Verbindungsstück (82) ein erstes Ende aufweist, das schwenkbar mit den ersten und zweiten Verbindungsösen (84, 85) verbunden ist.

15. Umwerfer (58, 300) nach Anspruch 14, wobei das Verbindungsstück (82) ein zweites Ende aufweist, das schwenkbar mit dem beweglichen Element (74) verbunden ist.

16. Umwerfer (58, 300) nach Anspruch 10, wobei das Verbindungsstück (82) direkt mit der Verbindungsöse (84) verbunden ist; und
das bewegliche Element (74) schwenkbar mit dem Verbindungsstück (82) verbunden ist.

## Revendications

1. Dérailleur arrière de bicyclette (58, 300) comprenant :
un élément de base (70, 70') pour une fixation à un cadre de bicyclette (14), dans lequel l'élément de base (70, 70') comprend :
une surface intérieure latéralement (130),
une surface extérieure latéralement (134), dans lequel l'une des surface intérieure latéralement (130) et surface extérieure latéralement (134) fait face, respectivement, à l'une des surface extérieure latéralement (64) et surface intérieure latéralement (66) du cadre (14) lorsque le dérailleur (58, 300) est monté sur le cadre (14), et ladite surface intérieure latéralement (130) ou surface extérieure latéralement (134) qui fait face au cadre (14), respectivement, inclut une portion de surface extrême (136),
une saillie (150) s'étendant dans une direction latérale depuis ladite surface intérieure latéralement (130) ou surface extérieure latéralement (134) qui fait face au cadre (14) et configurée pour coopérer avec un évidement (94) correspondant dans le cadre (14), et
une ouverture (170) destinée à recevoir à travers elle un élément de fixation (98) configuré pour fixer l'élément de base (70, 70') au cadre (14), dans lequel la saillie (150) est disposée à proximité immédiate de l'ouverture (170) et a une forme qui est configurée pour empêcher la saillie (150) de tourner dans l'évidement (94) quand on le regarde dans la direction latérale ; et
un élément mobile (74) supportant un guide-chaîne (78) et couplé de manière fonctionnelle à l'élément de base (70, 70') de sorte que le guide-chaîne (78) se déplace latéralement pour déplacer une chaîne (54) entre une pluralité de pignons,
**caractérisé en ce que** ladite surface extérieure latéralement (134) ou surface intérieure latéralement (130) qui fait face au cadre (14), respectivement, inclut une portion de surface en retrait sensiblement droite et plate (138) latéralement en retrait depuis la portion de surface extrême (136) et de portions de surface étagées (142, 146) s'étendant entre la portion de surface extrême (136) et la portion de surface en retrait (138), et la saillie (150) s'étend latéralement vers l'extérieur depuis la portion de surface en retrait (138).

2. Dérailleur (58, 300) selon la revendication 1, dans lequel l'élément de base (70, 70') est monobloc.

3. Dérailleur (58, 300) selon la revendication 1, dans lequel l'élément mobile (74) est couplé à l'élément de base (70) par au moins une articulation raccordée directement (82).

4. Dérailleur (58, 300) selon la revendication 1, dans lequel la saillie (150) comprend :
une première paroi latérale (158) ; et
une deuxième paroi latérale (162) orientée sensiblement parallèlement à la première paroi latérale (158).

5. Dérailleur (58, 300) selon la revendication 1 ou la revendication 4, dans lequel la saillie (150) comprend :
une première paroi latérale (158) ; et
une deuxième paroi latérale (162) tournée à l'opposé de la première paroi latérale (158).

6. Dérailleur (58, 300) selon la revendication 4 ou la revendication 5, dans lequel la première paroi latérale (158) est sensiblement droite, et dans lequel la deuxième paroi latérale (162) est sensiblement droite.

7. Dérailleur (58, 300) selon la revendication 4, dans lequel la saillie (150) comprend en outre une troisième paroi latérale (166) s'étendant entre la première paroi latérale (158) et la deuxième paroi latérale (162).

8. Dérailleur (58, 300) selon la revendication 7, dans lequel la première paroi latérale (158) est sensiblement droite, dans lequel la deuxième paroi latérale (162) est sensiblement droite, et dans lequel la troisième paroi latérale (166) est sensiblement droite.

9. Dérailleur (58, 300) selon la revendication 7, dans lequel la troisième paroi latérale (166) est sensiblement perpendiculaire à la première paroi latérale (158) et à la deuxième paroi latérale (162).

10. Dérailleur (58, 300) selon la revendication 1 ou la revendication 3, comprenant :
des première et deuxième oreilles d'accouplement (84, 85), dans lequel
l'articulation (82) est couplée aux première et deuxième oreilles d'accouplement (84, 85) ; et
l'élément mobile (74) est couplé à l'articulation (82).

11. Dérailleur (58, 300) selon la revendication 10, dans lequel les première et deuxième oreilles d'accouplement (84, 85) sont distantes l'une de l'autre.

12. Dérailleur (58, 300) selon la revendication 11, dans lequel les première et deuxième oreilles d'accouplement (84, 85) sont à l'opposé l'une de l'autre.

13. Dérailleur (58, 300) selon la revendication 12, dans lequel l'articulation (82) est disposée entre les première et deuxième oreilles d'accouplement (84, 85).

14. Dérailleur (58, 300) selon la revendication 13, dans lequel l'articulation (82) comprend une première extrémité raccordée de manière pivotante aux première et deuxième oreilles d'accouplement (84, 85).

15. Dérailleur (58, 300) selon la revendication 14, dans lequel l'articulation (82) a une deuxième extrémité raccordée de manière pivotante à l'élément mobile (74).

16. Dérailleur (58, 300) selon la revendication 10, dans lequel l'articulation (82) est raccordée directement à l'oreille d'accouplement (84) ; et
l'élément mobile (74) est couplé de manière pivotante à l'articulation (82).
